# EUROPEAN PATENT APPLICATION

(11) **EP 1 103 304 A2**
(43) Date of publication of application: **30.05.2001**
(21) Application number: 00125759.1
(22) Date of filing: 24.11.2000
(51) Int. Cl.: B01L 3/00, B65D 51/22

(54) **Self-venting reagent vessel and method of delivering a reagent to an analyzing instrument or other apparatus**

(30) Priority: 29.11.1999 US 167673 P; 26.09.2000 US 669651
(71) Applicant: Becton, Dickinson and Company, Franklin Lakes, New Jersey 07417-1880 (US)
(72) Inventor: Uffenheimer, Kenneth Frank, Los Gatos, CA 95033 (US); Godfrey, William Lunt, Danville, CA 94526 (US); Schmidt, Jacleen, Kay, Redwood City, CA 94062 (US)
(74) Representative: von Kreisler, Alek, Dipl.-Chem.

(57) **Abstract**

A reagent assembly is provided for supplying a reagent to an analyzing device or other apparatus without contaminating the reagent or exposing the operator to the reagents. The assembly includes a reagent vessel having a piercable or removable tip cap closing one end and a breathable closure member closing the opposite end. The breathable closure is a porous hydrophobic member having a pore size to allow the passage of air to vent the vessel and to prevent the passage of water or other aqueous fluids. The vessel includes a breakable ampoule containing a second reagent that can be a solid or liquid. The ampoule is broken to release the reagent and the vessel is placed in an analyzing instrument or other apparatus. A cannula is provided to pierce the tip cap or the tip cap can be removed and the vessel threaded onto a coupling member for feeding the reagent to the analyzing device or other apparatus by gravity.

## Description

### Field of the Invention

The present invention is directed to a self venting reagent vessel. More particularly, the invention is directed to an apparatus and method for supplying at least one reagent to a testing and analyzing instrument or other instrument.

### Background of the Invention

Many types of instruments exist for analyzing cells of a biological sample, such as a blood sample, to detect the presence of pathogens or other abnormalities. A flow cytometer, for example, photo-optically analyzes the fluorescent and light transmissive properties of reagent-stained cells contained in a sheath sample material stream to detect the presence of designated pathogens or other abnormalities in the cells.

A flow cytometer typically includes a sample reservoir for receiving a fluid sample, such as a blood sample, and a sheath reservoir containing a sheath fluid. The flow cytometer transports the cells in the fluid sample as a cell stream to a flow cell, while also directing the sheath fluid to the flow cell.

Within the flow cell, a liquid sheath is formed around the cell stream to impart a substantially uniform velocity to the cell stream. The flow cell hydrodynamically focuses the cells within the stream to pass through the center of a laser beam. The point at which the cells intersect the laser beam, commonly known as the interrogation point, can be inside or outside the flow cell. As a cell moves through the interrogation point, it causes the laser light to scatter. The laser light also excites components in the cell stream that have fluorescent properties, such as fluorescent markers that have been added to the fluid sample and adhered to certain cells of interest, or fluorescent beads mixed into the stream.

The flow cytometer further includes an appropriate detection system consisting of photomultiplier tubes, photodiodes or other light detecting devices, which are focused at the intersection point. The flow cytometer analyzes the detected light to measure physical and fluorescent properties of the cell. The flow cytometer can also sort the cells based on these measured properties.

Prior to introducing a cell sample into a flow cytometer or other type of instrument for analysis, it is generally necessary to treat the cell sample with specific dyes, lysing agents, diluents, or other types of reagents. The reagents are stored in a separate container or vessel and are typically mixed with the biological sample shortly before being analyzed. Generally, the reagents are supplied to the analyzing instrument or, in the case of a flow cytometer, to a sample processing apparatus used in conjunction with the analyzing instrument, from a suitable storage vessel. Transferring the reagents to the analyzing instrument or other apparatus can be difficult under some conditions, and can expose the operator to various substances or result in contamination of the reagents.

Various dispensing devices are known in the art for liquid reagents. One example is disclosed in U.S. Patent No. 4,997,768 to Uffenheimer. This device includes a housing having flexible side walls and a pair of breakable capsules contained within the housing. A mechanical force is applied to the side walls to break the capsules and release the contents. The device is intended for use in a centrifuge to force the liquid contents through a liquid supply channel.

Accordingly, there is a continuing need in the industry for an improved apparatus for supplying a reagent to an analytical instrument or other instrument.

### Summary of the Invention

The present invention is directed to a method and an apparatus for supplying a reagent to an instrument, particularly an instrument for preparing and/or analyzing a test sample. More particularly, the invention is directed to a reagent vessel assembly for supplying a reagent to an analyzing instrument or other instrument.

A primary object of the invention is to provide a reagent vessel for quickly and easily supplying a reagent to an analyzing instrument, sample preparation device, or other instrument.

Another object of the invention is to provide a drug delivery device having at least two components that can be mixed before delivering to a patient or instrument.

A further object of the invention is to provide a reagent vessel that is self venting so that a reagent can be transferred at ambient pressure, or under pressure, to an analyzing instrument or other instrument.

Another object of the invention is to provide a reagent vessel with a porous hydrophobic closure member to allow venting of the vessel without leakage of aqueous media contained in the vessel.

A further object of the invention is to provide a reagent vessel having a breakable ampoule containing a first reagent, and a second reagent in the vessel outside the ampoule, where the reagents can be mixed prior to being dispensed from the vessel.

Still another object of the invention is to provide a reagent vessel that is inexpensive to manufacture and can be used without the risk of contamination of the reagent or exposure of the operator to the reagent while dispensing the contents of the vessel.

Another aspect of the invention is to provide a reagent vessel having a breakable ampoule containing a reagent and a filter to prevent pieces of the ampoule and other solids from exiting the vessel.

A further aspect of the invention is to provide a reagent vessel having a self-sealing septum that can be pierced to deliver the reagent to an analyzing instrument or other instrument.

Still another aspect of the invention is to provide a reagent vessel having a removable closure member on a coupling end of the vessel, wherein the coupling end can be coupled to the inlet of an analyzing instrument or other instrument.

The various aspects of the invention are substantially attained by providing an apparatus for supplying a reagent to an analyzing instrument or other instrument. The reagent supplying apparatus comprises a vessel having at least one first reagent contained therein. The vessel has a side wall, a first open end and a second open end. The reagent supply apparatus also comprises a first closure member coupled to the first open end of the vessel closing the first open end. The first closure member has a hydrophobic permeable membrane for allowing air to enter the vessel and for substantially preventing the passage of aqueous liquid. The reagent supply apparatus also comprises a second closure member coupled to the second end of the vessel for closing the vessel.

Other objects, advantages and other salient features of the invention will become apparent form the following detailed description of the invention which, taken in conjunction with the annexed drawings, discloses preferred embodiments of the invention.

### Brief Description of the Drawings

Referring to the drawings, which form a part of this original disclosure:
Figure 1 is an exploded cross-sectional view of the reagent vessel assembly in a first embodiment of the invention;
Figure 2 is a cross-sectional view of the assembled reagent vessel of Figure 1;
Figure 3 is a partial cross-sectional view of the inlet of an analyzing instrument or other apparatus and the reagent vessel;
Figure 4 is a cross-sectional view of the analyzing instrument or other apparatus of Figure 3 showing the cannula piercing the septum of the reagent vessel;
Figure 4A is a partial cross-sectional view of the reagent vessel having a molded one-piece filter element;
Figure 5 is a top view of the venting closure of the reagent vessel in a preferred embodiment of the invention;
Figure 6 is a schematic diagram of the feed system of an analyzing instrument or other apparatus in one embodiment of the invention;
Figure 7 is a cross-sectional view of the reagent vessel and inlet of an analyzing instrument or other apparatus in a second embodiment of the invention;
Figure 8 is a cross-sectional view of the reagent vessel coupled to the inlet of the analyzing instrument or other apparatus of Figure 7;
Figure 9 is a cross-sectionalviewof a reagent vessel in a third embodiment of the invention;
Figure 10 is a cross-sectional view of the reagent vessel coupled to the analyzing instrument or other apparatus;
Figure 11 is a top view of a cracking device for rupturing the ampoule in one embodiment of the invention; and
Figure 12 is a cross-sectional view showing the cracking device breaking the ampoule.

### Detailed Description of the Invention

The present invention is directed to an assembly containing a reagent or drug and to a method for delivering a reagent or drug to a patient, an analyzing instrument, sample preparation device or other instrument. More particularly, the invention is directed to a reagent-containing vessel for supplying a reagent to an analyzing instrument or other instrument.

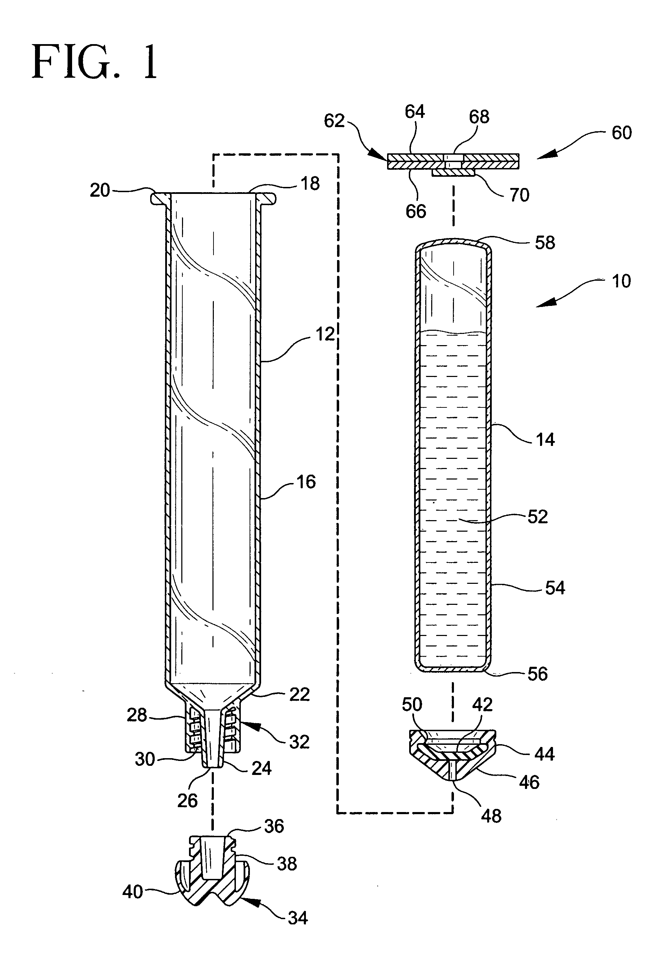

Referring to Figures 1-4, a first embodiment of the invention includes a reagent vessel assembly 10. In this embodiment, the assembly 10 includes a reagent vessel 12 and a reagent containing ampoule 14. In the embodiment illustrated, the reagent vessel 12 is a plastic syringe barrel. In further embodiments, the reagent vessel 12 can have a variety of shapes and is not limited to the shape or structure of a syringe barrel. For example, the vessel can be a tubular or square member with at least one outlet. The vessel can be of a suitable size to supply a required volume of a reagent. In one embodiment of the invention, the vessel contains about 3-10 ml of a liquid reagent.

The reagent vessel 12 is preferably made of a suitable plastic material such as polyethylene or polypropylene by various molding processes as known in the art. In the illustrated embodiment, the reagent vessel 12 includes a cylindrical side wall 16 having an open top end 18 and a flange 20 surrounding the open top end 18. The side wall is preferably sufficiently flexible to allow the ampoule 14 to be rupturable when ready for use. The side wall 16 has a tapered bottom wall 22 converging toward a nozzle 24 forming an outlet passage 26. A collar 28 encircles the nozzle 24 and has an axial length slightly shorter than the axial length of the nozzle 24. The collar 28 includes internal threads 30 to define a threaded luer-type fitting 32.

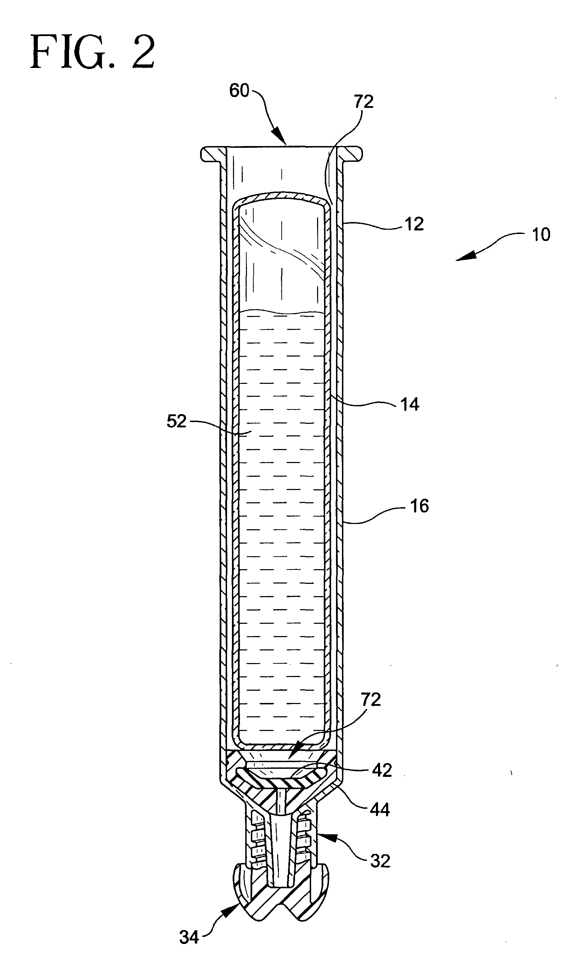

A tip cap 34 is coupled to the nozzle 24 to close the bottom end of the reagent vessel 12. The tip cap defines a septum and is preferably made of a flexible rubber like material capable of deforming and forming a seal for the bottom end of the reagent vessel 12. As shown in Figure 1, the tip cap 34 includes a cylindrical sleeve 36 having external threads 38 and an end portion 40. The sleeve 36 is dimensioned to fit over the nozzle 24 and engage the threads 30 of the luer fitting 32 as shown in Figure 2. Preferably, the tip cap is made of a resilient material that can be pierced by a cannula and can self seal after the cannula is removed.

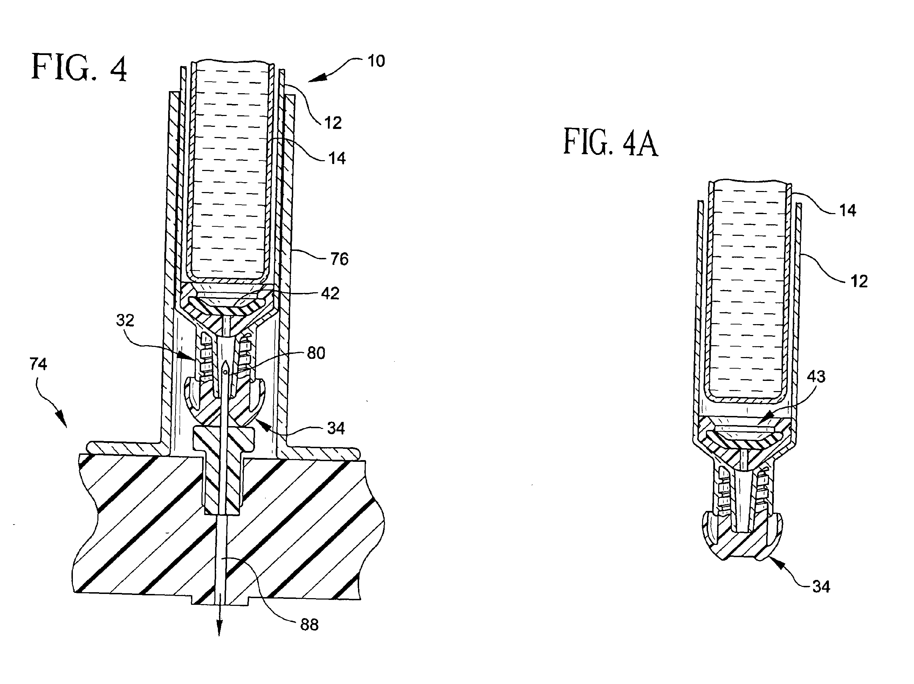

A filter member 42 is positioned in the bottom end of the reagent vessel 12 at the outlet end. The filter material can be a mesh or screen of woven or non-woven material, an expanded material or a frit as known in the art. In the embodiment illustrated, the filter member 42 is a porous filter membrane. The filter member 42 is a disk shaped member dimensioned to engage the side wall 16 of the reagent vessel 12 to retain the filter member 42 in place. Alternatively, the filter membrane can be a one-piece, integrally formed member 43 molded or shaped to conform to the bottom surfaces of the vessel 12 as shown in Figure 4A. In the embodiment illustrated in Figures 1-4, the filter member 42 is coupled to a filter holder 44 having a shape and dimensions similar to a standard syringe plunger tip. The filter holder 44 has a diameter corresponding to the diameter of the side wall 16 with a tapered bottom wall 46 and a central opening 48 extending axially through the holder 44. A recess 50 is provided to receive the filter member 42.

In the embodiment of Figures 1-4, the ampoule 14 contains a reagent 52. The reagent is generally a liquid, such as an aqueous reagent, although in further embodiments, the reagent can be a non-polar solvent, a solid or dried powder. In some embodiments, the ampoule may contain a lyophilized reagent that can be reconstituted prior to use. The ampoule is preferably made of glass or other breakable material that will not interact with the reagents. The ampoule 14 includes a substantially cylindrical side wall having a dimension to fit within the side wall 16 of the reagent vessel 12. The ends 56 and 58 of the ampoule 14 are sealed to contain the reagent. The ampoule is dimensioned to fit within the side wall of the vessel 12 and to contain a desired amount of a reagent.

A closure member 60 is provided to close the top open end 18 of the reagent vessel 12. The closure member 60 preferably contains a hydrophobic porous member that allows air to pass through the closure while preventing aqueous media from passing through the closure member. In the embodiment illustrated, the closure member 60 includes a substrate 62 having a foil layer 64 and a layer 66 of a heat sealable polymeric material. The heat sealable layer 66 can be, for example, polyethylene or polypropylene that is compatible with the reagent vessel 12 to form a seal and prevent leakage from the reagent vessel. The closure member 60 can be welded to the flange 20 of the vessel 12 by heat or ultrasonic energy. Alternatively, an adhesive can be used to attach the closure member. In further embodiments, the closure member can be positioned in the vessel spaced from the flange 20.

A central aperture 68 is provided through the substrate 62 as shown in Figure 1. A breathable, semi-permeable membrane 70 is attached to the substrate 62 on the bottom face of the aperture 68. The breathable membrane 70 preferably is a porous hydrophobic member having a pore size sufficiently small to allow air to pass through the membrane while preventing the passage of aqueous solutions. A suitable breathable membrane 70 can be made from polytetrafluoroethylene as known in the art. Suitable hydrophobic membranes are disclosed in U.S. Patent No. 4,997,768 to Uffenheimer; U.S. Patent No. 5,600,358 to Baldwin; and U.S. Patent No. 5,863,499 to Kralovic, which are hereby incorporated by reference in their entirety.

The assembly 10 is formed by coupling the tip cap 34 to the luer fitting 32 and positioning the filter 42 member and filter holder 44 in the bottom portion of the reagent vessel 12. The ampoule 14 containing the reagent is then placed in the reagent vessel. In embodiments of the invention, a second reagent 72 can be placed in the reagent vessel 12 between the ampoule 14 and the side wall 16. Alternatively, a second reagent can be placed in a space below the ampoule adjacent the surface of the filter member 42. The second reagent can be a liquid reagent, such as a dye, or a dried or lyophilized reagent. Generally, about 1 ml of the second reagent is provided in the vessel 12 between the ampoule 14 and the side wall 16. The closure 60 is then attached to the flange 20 of the reagent vessel to close the vessel. The assembly is generally suitable for most two-component systems where it is desirable to separate the components until ready for use.

It is desirable to separate the second reagent from the reagent within the ampoule until ready for use when the combination of the reagents forms an unstable solution or suspension. For example, lyophilized reagent can be provided in the vessel 12 with a reconstituting solvent contained in the ampoule 14. Another example is a dye that is stable in non-polar solvent, but must be delivered in polar solvent. In this example, the ampoule can contain a buffered saline solution and a second reagent, such as a dye dissolved or dispersed in DMSO, is provided in the vessel outside the ampoule. The ampoule can be broken to disperse the dye in the saline solution.

The reagents can be a number of different reagents depending on the particular analytic tests being performed. In one embodiment of the invention, the ampoule contains a buffered saline solution containing up to about 25% by volume dimethylsulfoxide. The saline solution can also contain other reagents as known in the art. The second reagent in one embodiment of the invention is a dried or solution of a hydrophobic dye for staining the nuclei of cells in DNA analysis. Various cytodyes, probes or markers can be contained in the vessel for treating the test sample.

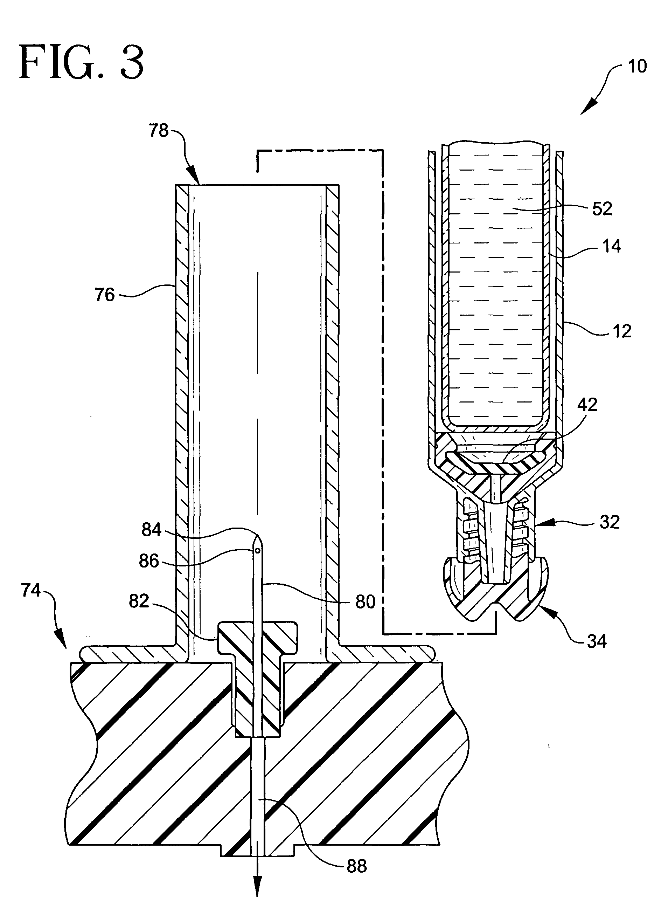

The assembly 10 provides a convenient and efficient system for supplying one or more reagents to an analytical testing device or other apparatus without contaminating the reagents or exposing the operator to the reagents. In the embodiment shown in Figure 3, the analytical testing or preparation instrument 74 includes a sleeve 76 having an open end 78 for receiving the assembly 10. The sleeve 76 is dimensioned to guide and support the reagent vessel 12. A cannula 80 extends through a collar 82 into the sleeve 76. The cannula 80 includes a blunt or pointed tip 84 and an opening 86 in the side of the cannula 80 that is offset from the tip and communicates with a hollow passage 88 for carrying the reagents to the analytical instrument. Preferably, the cannula 80 is of a blunt tip of a non-coring design to prevent coring of the tip cap 34 and be self-sealing when the cannula is removed. In this manner, the cannula can pierce the tip cap and then be withdrawn without the remaining contents of the vessel leaking through the pierced hole in the tip cap.

The assembly 10 is positioned and guided by the sleeve 76 as shown in Figure 4 and pressed downwardly until the cannula 80 pierces the tip cap 34. Generally, hand pressure by the operator is sufficient to cause the cannula 80 to pierce the tip cap 34. The cannula 80 has a length to extend through the tip cap 34 without penetrating the filter member 42. The ampoule 14 is broken by compressing the flexible side walls 16 of the reagent vessel 12 until the ampoule ruptures and releases the reagent 52 contained therein. The ampoule can be broken by hand or using a suitable tool. The ampoule can be broken before, during or after the reagent vessel 12 is pressed into the sleeve 76 of the instrument 74. The reagent solution 52 flows downwardly through the filter member 42 into the nozzle 24 and is carried through the cannula 80 to the analyzing instrument. The filter member 42 prevents glass fragments from the ampoule and other solid materials from exiting the reagent vessel 12.

The breathable membrane 70 allows air to pass through the aperture 68 so that the reagent solution can be fed by gravity to the cannula 80 under atmospheric pressure. Generally, the instrument 74 provides a suction to draw the reagent from the vessel 12. In this manner, it is not necessary to apply a positive pressure to the interior of the reagent vessel 12 or apply a negative pressure to the needle to withdraw the reagent solution. In alternative embodiments, the vessel can be coupled to a device for applying a positive pressure to the breathable membrane to force the reagent solution through the cannula 80 at a desired rate. After the reagent has drained into the analyzing instrument, the vessel is removed by pulling the vessel from the sleeve. The resilient tip cap 34 and non-coring cannula 80 allow the puncture hole to close and prevent leakage of any remaining contents. The vessel 12 can be discarded or refilled as desired.

In the embodiment illustrated, a single ampoule containing a reagent, diluent or solvent is shown. In further embodiments, two or more ampoules can be included in the vessel 12. The ampoules can be arranged end-to-end or side-by-side depending on dimensions of the ampoules. Alternatively, a second ampoule can be contained within a larger first ampoule. This allows the various reagents to be separated until ready for use. Generally, the ampoules are ruptured and the vessel gently shaken to mix the reagents together. The vessel containing the mixed reagents can then be placed in the sleeve of the analyzing instrument to deliver the reagents to the instrument.

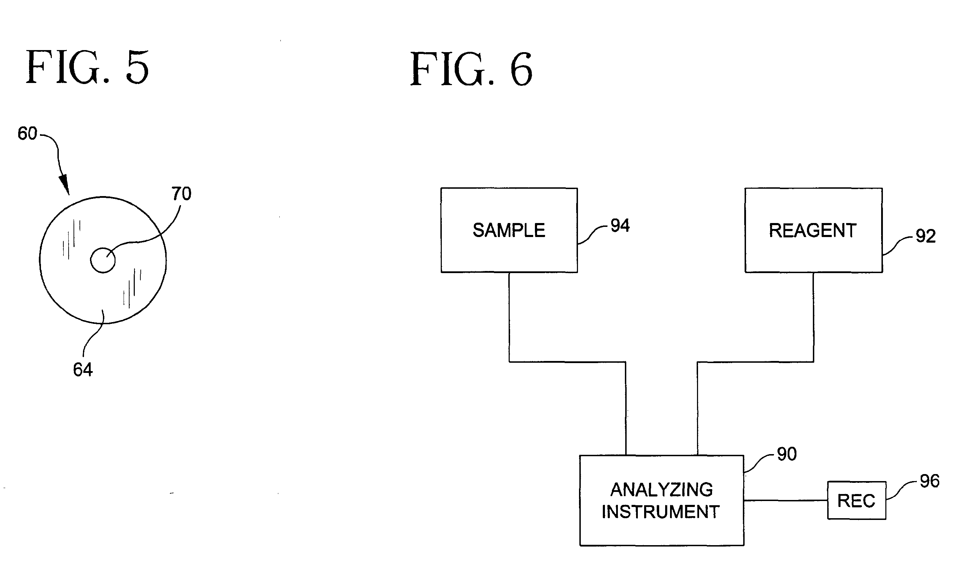

Referring to Figure 6, an analyzing instrument 90 is illustrated schematically for use in conjunction with the reagent vessel. A reagent as indicated by block 92 and a test sample indicated by block 94 are supplied to the analyzing instrument 90 for analysis. Data from the analyzing instrument 90 can be fed to a suitable recording device 96. The analyzing instrument 90 can be any suitable instrument as known in the art capable of analyzing liquid or gaseous samples such as a blood analyzing instrument. For example, the instrument can be able to detect the presence of pathogens in blood samples or airborne pathogens in a gas sample. In one embodiment of the invention, the analyzing instrument is a sample preparation device for a flow cytometer as known in the art. Examples of flow cytometers are disclosed in U.S. Patent Nos. 3,960,449; 4,347,935; 4,667,830; 5,464,581; 5,438,469; 5,602,039; 5,643,796 and 5,700,692; the entire contents of which are incorporated by reference in their entirety. In other embodiments, the reagent 92 and sample 94 can be supplied to a sample processing apparatus (not shown) that is used in conjunction with the analyzing instrument 90, with the processed sample then being supplied to the analyzing instrument 90. An example of such a sample processing apparatus is a cell lysing and washing apparatus of the type disclosed in a copending U.S. patent application of Kenneth F. Uffenheimer and Pierre Bierre, filed on November 23, 1999 and entitled "Apparatus and Method for Processing Sample Materials Contained in a Plurality of Sample Tubes", also incorporated by reference herein.

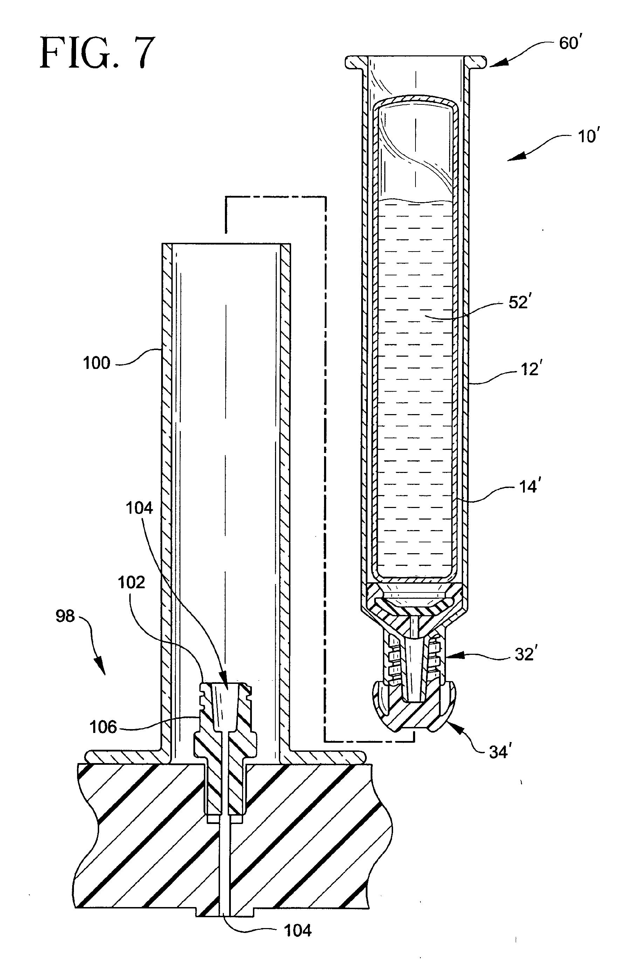

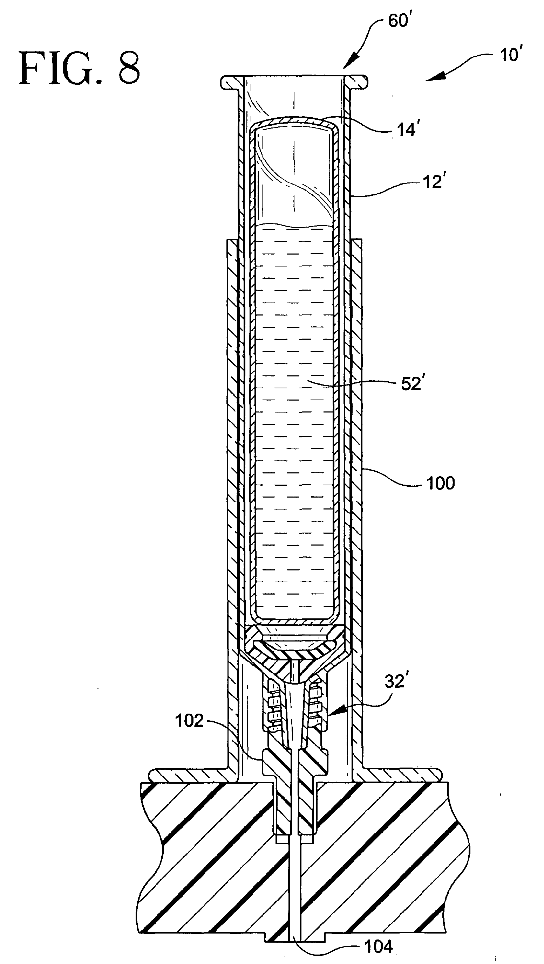

Referring to Figures 7 and 8, a second embodiment of the invention is illustrated. The reagent containing assembly 10' is identical to the assembly 10 of the embodiment of Figures 1-6 so that identical components are identified by the same reference numerals with the addition of a prime.

As in the previous embodiment, the reagent vessel 12' includes an ampoule 14' containing a liquid reagent. The analyzing instrument 98 or other apparatus includes a cylindrical sleeve 100 for receiving the reagent vessel 12. A threaded collar 102 having a central passage 104 is provided in the bottom of the sleeve 100. The collar 102 includes external threads 106 for coupling with the luer fitting 32' of the reagent vessel 12'. The passage 104 carries the liquid reagents to the analyzing instrument or other apparatus as in the previous embodiment.

In this embodiment, the tip cap 34' is removed from the luer fitting 32' of the reagent vessel 12' prior to inserting the vessel 12' into the sleeve 100. To prevent the reagent solution 52' from flowing outwardly through the nozzle 24', it is desirable to close the aperture 68' to cover the breathable membrane 70' to prevent air from entering the reagent vessel 12'. A convenient manner of closing the aperture 68' is for the operator to place a finger over the aperture 68 until the reagent vessel 12' is threaded onto the collar 102. At that time, the operator's finger can be removed from the aperture 68' to allow the reagent solution to flow through the passage 104. In further embodiments, a tape or other peelable strip (not shown) can be applied to cover the porous membrane to prevent air from entering or liquid from evaporating until the reagent is ready for delivery. At that time, the tape or strip is removed to dispense the reagent. As in the previous embodiment, the ampoule 14' can be ruptured before, during or after the reagent vessel 12' is threaded onto the collar 104. In still further embodiments, a piston or plunger can be provided to dispense the contents of the vessel.

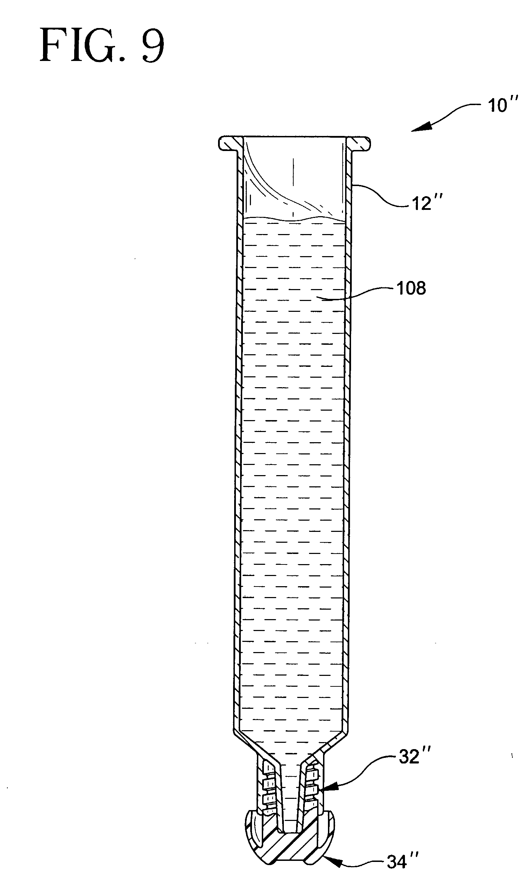

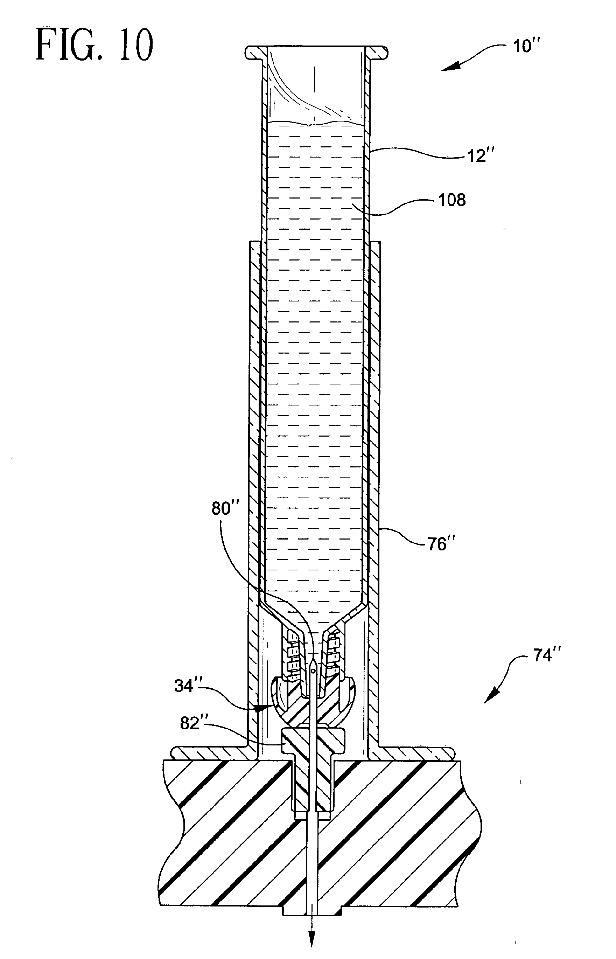

Referring to Figures 9 and 10, a third embodiment of the invention is illustrated. In this embodiment, the reagent assembly 10" is similar to the assembly 10 of Figures 1 and 2 except that the breakable ampoule is not included. In this embodiment, a reagent solution 108 is contained within the reagent vessel 12". As in the previous embodiments, the open top end 18" is closed by the breathable closure member 60" and a tip cap 34".

As in the previous embodiment, the analyzing instrument 74" or other apparatus includes a sleeve 76" and a cannula 80". The reagent vessel 12" is placed in the sleeve 76" and pushed downwardly until the cannula 80" penetrates the tip cap 34". The reagent solution 108 is then able to flow downwardly through the needle to the analyzing instrument or other apparatus. In this embodiment, the filter member is not necessary in the reagent vessel 12" since there are no glass ampoule fragments or solid materials which can flow through the nozzle 24" and interfere with the feeding of the reagent solution.

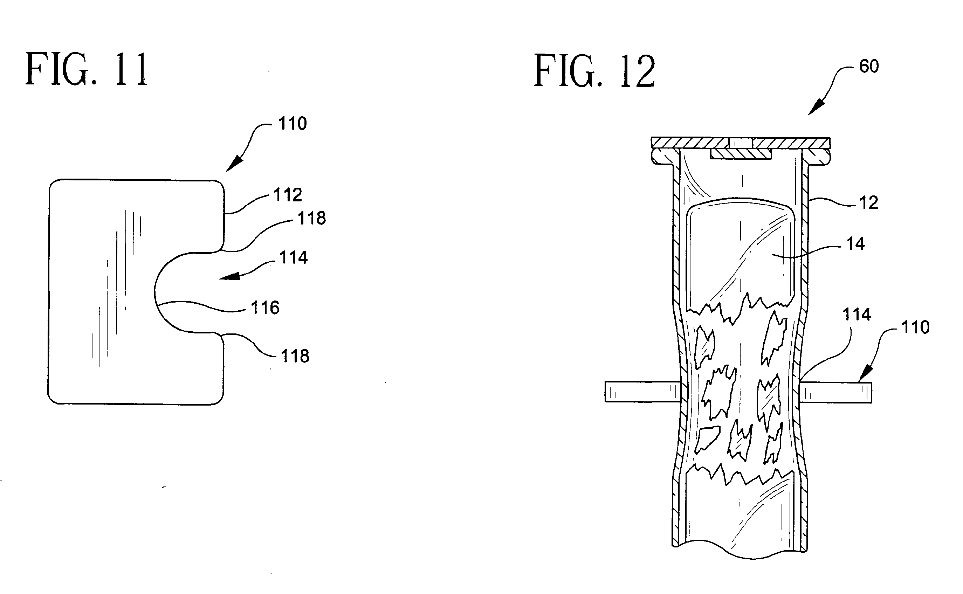

In the disclosed embodiments of the invention, the reagent solution is contained in a rupturable ampoule that is preferably made of glass. The ampoule can be broken by hand or by using standard methods as known in the art. For example, the ampoule can be broken using a cracking device 110 as shown in Figure 11. The cracking device 110 is a substantially flat member having a generally square configuration. One side edge 112 of the cracking device 110 includes a recess 114 having a curved bottom side 116 and tapered corners 118. The recess 114 has a dimension slightly less than the diameter of the side wall of the reagent vessel 12. The cracking device 110 is forced around the side wall of the reagent vessel to compress the side walls inwardly to break the ampoule as shown in Figure 12. The cracking device 110 is then removed and the reagent vessel placed in the analyzing instrument or other instrument.

Various embodiments have been chosen to illustrate the present invention. In each of the illustrated embodiments, a breathable closure member is provided on the top end of the reaction vessel to allow air to enter the vessel and prevent the reagent solution from passing through the closure member. Thus, in each of the embodiments, the reagent vessel is coupled to the analyzing instrument or other instrument so that the reagent solution can flow through the outlet nozzle by gravity without the need for a pressurizing or pumping system to withdraw the reagent solution from the vessel. It will be apparent to those skilled in the art that various modifications can be made to the reagent vessel without departing from the scope of the invention as set forth herein.

## Claims

1. An apparatus for supplying a reagent to an analyzing instrument comprising:
a vessel having at least one reagent contained therein, said vessel having a side wall, a first open end and a second open end;
a first closure member coupled to said first open end of said vessel closing said first open end, said first closure member having a hydrophobic permeable membrane for allowing air to enter said vessel and substantially prevent the passage of aqueous liquid;
a second closure member coupled to said second end of said vessel for closing said vessel; and
optionally, a filter member in said vessel at said second open end.

2. The apparatus of claim 1, wherein said side wall of said vessel is flexible.

3. The apparatus of claim 1, wherein said vessel contains a first ampoule containing said first reagent.

4. The apparatus of claim 1, wherein said second open end of said vessel includes a luer lock collar.

5. The apparatus of claim 1, wherein said vessel contains a plurality of breakable ampoules, each of said ampoules containing a solvent or reagent.

6. A method for supplying a reagent to an analyzing instrument comprising:
a) providing an apparatus comprising:
(i) a vessel having at least one reagent contained therein, said vessel having a side wall, a first open end and a second open end;
(ii) a first closure member coupled to said first open end of said vessel closing said first open end, said first closure member having a hydrophobic permeable membrane for allowing air to enter said vessel and substantially prevent the passage of aqueous liquid;
(iii) a second closure member coupled to said second end of said vessel for closing said vessel; and
(iv) optionally, a filter member in said vessel at said second open end;
b) providing an analyzing instrument having:
(i) a first means for guiding and supporting said apparatus;
(ii) a second means for piercing said apparatus having an opening in the side of said second means; and
(iii) a third means in said second means for carrying one or more reagents from the apparatus into said instrument;
c) positioning said apparatus into said first means and pressing downwardly on said apparatus until said second means pierces the second closure member of said apparatus;
d) allowing said reagent to flow through the second closure member and into the second means to the third means;
e) allowing said reagent to flow from the third means into the analyzing instrument.

7. The method of claim 6, wherein said side wall of said vessel of said apparatus is flexible.

8. The method of claim 6, wherein said vessel of said apparatus contains a first ampoule containing said first reagent, and further wherein, the first ampoule in said vessel is broken, before, during or after said vessel in said apparatus is positioned into said first means in step (c).

9. The method of claim 6, wherein said second open end of said vessel includes a luer lock collar.

10. The method of claim 7, wherein said vessel contains a plurality of breakable ampoules, each of said ampoules containing a solvent or reagent, and further wherein, said ampoules are broken before, during or after said vessel in said apparatus is positioned into said first means in step (c).
